# FASCICULE DE BREVET EUROPEEN

(11) **EP 2 863 130 B1**
(45) Date de publication et mention de la délivrance du brevet: **26.04.2017**
(21) Numéro de dépôt: 14189191.1
(22) Date de dépôt: 16.10.2014
(51) Int. Cl.: F24D 5/12, F24D 19/10, F24F 3/06, F24F 12/00

(54) **Procédé de régulation d'une installation thermique pour un bâtiment**
Verfahren zur Regulierung einer thermischen Anlage für ein Gebäude
Method for the regulation of a thermal system for a building

(30) Priorité: 16.10.2013 FR 1360060
(43) Date de publication de la demande: 22.04.2015
(73) Titulaire: Société Muller & Cie, 75018 Paris (FR)
(72) Inventeur: Fevrier, Bruno, 75018 PARIS (FR)
(74) Mandataire: Ipside

(56) Documents cités:
- EP-A1- 0 084 577
- EP-A1- 1 731 846
- DE-A1- 10 323 287
- DE-U1- 8 714 230
- FR-A1- 2 979 418

## Description

La présente invention se rapporte à un procédé de régulation d'une installation thermique. Afin de minimiser le bilan énergétique d'un bâtiment tertiaire, il est courant d'avoir recours aux énergies renouvelables ou aux réseaux urbains d'eau froide ou d'eau chaude pour satisfaire les besoins énergétiques du dit bâtiment. En fonction des possibilités et/ou autorisations, il est aussi possible d'avoir recours aux eaux de nappe par l'intermédiaire d'un forage, ou à une sonde géothermale.

Dans le cas d'une connexion aux deux réseaux urbains, il est d'usage d'utiliser ceux-ci pour maintenir en température les deux circuits d'eau froide et d'eau chaude d'une installation 4 tubes, lesdits circuits étant équipés d'unités terminales de type ventilo-convecteur.

Dans le cas d'un raccordement à un forage ou sonde géothermale, une pompe à chaleur de type Eau / Eau est connectée à cette source d'énergie. Cette pompe à chaleur, réversible, permet de maintenir en température l'eau chaude et l'eau froide des deux circuits d'une installation 4 tubes.

Les ventilo-convecteurs et les pompes à chaleur sont connues comme des émetteurs thermiques avantageux, tant pour leur performance énergétique que pour leur modularité.

Cependant, sans l'existence d'une source d'eau chaude, une installation de type ventilo-convecteur 4 tubes ne peut assurer de fonction chauffage. De leur côté, les pompes à chaleur, bien qu'économiques, sont cependant plus consommatrices en énergies que les ventilo-convecteurs.

Le document DE-103.23.287 décrit un procédé de récupération d'énergie de l'air d'échappement ou de l'air extérieur d'une installation climatique pour le chauffage ou le refroidissement d'un flux d'air, notamment par l'utilisation d'une installation constituée de plusieurs échangeurs thermiques et d'une pompe à chaleur raccordée à un dispositif de stockage d'énergie. Notamment, cette installation comprend un circuit de fluide, par exemple un circuit d'eau, disposé entre un échangeur thermique et une pompe à chaleur.

Selon ce document, pour réchauffer ou rafraichir l'air, l'eau contenue dans ce circuit est mise à la température adéquate pour faire fonctionner le système, la température idéale étant obtenue par l'intermédiaire d'une vanne de mélange.

L'inconvénient du dispositif décrit dans le document DE-103.23.287 est que le rafraichissement ou le réchauffement de l'air est obtenu par l'intermédiaire d'une boucle de liquide, par exemple une boucle d'eau, dont la température doit être précisément réglée via une vanne de mélange. Or ce dispositif est complexe, peu fiable et présente des performances dégradées du fait de l'utilisation d'une pompe de circulation du liquide et de la cascade d'échangeurs fluide frigorigène/liquide et liquide/air.

La présente invention vise à optimiser les dépenses énergétiques d'une installation thermique, en utilisant deux types d'échangeurs thermiques pour une unique source d'eau froide.

Un objet est en effet une installation de régulation thermique, ou unité de confort individuelle pour un bâtiment, ladite installation comportant :
- un premier circuit d'air, ledit premier circuit comprenant un ventilateur, une entrée d'air reliée à l'intérieur d'un bâtiment et une sortie d'air également reliée à l'intérieur dudit bâtiment, le premier circuit comprenant un premier échangeur thermique air/eau et un deuxième échangeur thermique air/fluide frigorigène, le deuxième échangeur étant disposé en aval du premier échangeur ;
- un deuxième circuit d'eau comprenant un troisième échangeur thermique eau/fluide frigorigène, le deuxième circuit d'eau comprenant une vanne trois voies reliant une entrée d'eau dudit circuit à deux branches, lesdites branches étant toutes deux reliées au troisième échangeur thermique, le premier échangeur thermique étant disposé entre ladite vanne trois voies et ledit troisième échangeur thermique sur une seule desdites deux branches ;
- un système de pompe à chaleur comprenant un troisième circuit de fluide frigorigène, ledit troisième circuit reliant successivement le deuxième échangeur thermique air/fluide frigorigène, un compresseur, le troisième échangeur thermique eau/fluide frigorigène et un détendeur, le compresseur étant muni d'une vanne quatre voies à inversion de cycle.

La mise en série des deux échangeurs air/eau et air/fluide frigorigène permet d'optimiser la régulation thermique de l'air à partir d'une unique source d'énergie primaire, en l'occurrence le réseau d'eau froide.

Selon un mode de réalisation l'installation comporte en outre un système de ventilation mécanique contrôlée double flux, ledit système comprenant : un quatrième circuit d'air extrait à l'intérieur du bâtiment, ledit quatrième circuit comprenant un ventilateur, une entrée d'air reliée à l'intérieur dudit bâtiment et une sortie d'air reliée à l'extérieur dudit bâtiment ; un cinquième circuit d'air neuf extérieur au bâtiment, ledit cinquième circuit comprenant un ventilateur, une entrée d'air reliée à l'extérieur dudit bâtiment et une sortie d'air reliée au premier circuit d'air, en amont du premier échangeur thermique ; un quatrième échangeur thermique, situé en aval des entrées des quatrième et cinquième circuits, ledit quatrième échangeur permettant un échange thermique entre l'air extrait et l'air neuf.

Pour réduire les dépenses énergétiques, une telle ventilation double flux permet à l'air neuf entrant dans le bâtiment de récupérer des calories sur l'air extrait du bâtiment et rejeté à l'extérieur.

Cependant, il existe des cas où il est plus avantageux de ne pas effectuer un tel échange thermique entre l'air entrant et l'air sortant, selon les divers besoins énergétiques dans le bâtiment.

Ainsi, de manière préférentielle, le système double flux comporte une vanne de contournement ou vanne by-pass montée en parallèle du quatrième échangeur sur une branche secondaire du cinquième circuit d'air neuf.

La vanne by-pass permet de contrôler le débit d'air du cinquième circuit passant par le quatrième échangeur, afin de moduler la température des différents flux d'air selon les besoins énergétiques de l'installation.

Un objet de l'invention est un procédé de régulation d'une installation telle que décrite ci-dessus. Un tel procédé comporte les étapes suivantes :
- une température d'entrée d'air est mesurée sur le premier circuit, en amont du premier échangeur thermique ;
- une température d'eau est mesurée en entrée du deuxième circuit, en amont de la vanne à trois voie ;
- si la température d'entrée d'air est supérieure à une température de consigne de sortie d'air et si la température d'eau est inférieure à un premier seuil dépendant de ladite température d'entrée d'air, alors l'eau du deuxième circuit circule dans le premier échangeur.

L'eau du deuxième circuit peut ainsi rafraîchir l'air du premier circuit avant que cet air ne rejoigne l'intérieur du bâtiment.

Selon un mode de réalisation de l'invention, le procédé comporte en outre les étapes suivantes :
- si la température d'eau est inférieure à un deuxième seuil dépendant de la température de consigne de sortie d'air, alors le compresseur est arrêté ;
- si la température d'eau dépasse ledit deuxième seuil, alors le compresseur est en marche et la vanne quatre voies est configurée de sorte à ce que le deuxième échangeur thermique fonctionne en mode évaporateur.

En effet, la température de la source d'eau peut être trop élevée pour refroidir suffisamment l'air par échange thermique direct. Il faut alors faire intervenir la pompe à chaleur pour atteindre la température d'air souhaitée.

Selon une variante au mode de réalisation précédent, le contrôle ne s'effectue pas sur le circuit d'eau mais en sortie du circuit d'air. Le procédé comporte alors les étapes suivantes :
- une température de sortie d'air est mesurée en sortie du premier circuit ;
- si ladite température de sortie d'air est inférieure à la température de consigne de sortie d'air, alors le compresseur est arrêté ;
- si ladite température de sortie d'air dépasse ladite température de consigne, alors le compresseur est en marche et la vanne quatre voies est configurée de sorte à ce que le deuxième échangeur thermique fonctionne en mode évaporateur.

Il arrive également que la température de la source d'eau soit trop élevée pour refroidir l'air par échange thermique direct, quelle que soit la température de consigne en sortie du premier circuit. Par exemple, l'eau en entrée du deuxième circuit a une température égale ou supérieure à celle de l'air en entrée du premier circuit.

Il faut alors éviter l'échange thermique direct et faire fonctionner la pompe à chaleur pour atteindre la température d'air souhaitée. Le procédé comporte alors préférentiellement l'étape suivante : si la température d'entrée d'air est supérieure à une température de consigne de sortie d'air et si la température d'eau est supérieure au premier seuil dépendant de ladite température d'entrée d'air, alors l'eau du deuxième circuit ne circule pas dans le premier échangeur thermique, le compresseur est en marche et la vanne quatre voies est configurée de sorte à ce que le deuxième échangeur thermique fonctionne en mode évaporateur.

Il est également intéressant de permettre à l'installation de fonctionner en mode chauffage plutôt qu'en mode rafraîchissement. Le procédé comporte alors préférentiellement l'étape suivante : si la température d'entrée d'air est inférieure à une température de consigne de sortie d'air, alors l'eau du deuxième circuit ne circule pas dans le premier échangeur thermique, le compresseur est en marche et la vanne quatre voies est configurée de sorte à ce que le deuxième échangeur thermique fonctionne en mode condenseur.

Le chauffage est ainsi assuré directement et uniquement par la pompe à chaleur.

Dans le cas où l'installation comporte un système de ventilation double flux avec vanne by-pass, le procédé peut avantageusement comporter les étapes suivantes :
- une première température d'air est mesurée en entrée du premier circuit ;
- une seconde température d'air est mesurée en entrée du cinquième circuit ;
- si la première température est supérieure à une température de consigne de sortie d'air et à la seconde température, alors la vanne by-pass est ouverte.

L'ouverture plus ou moins importante de la vanne by-pass permet de contrôler le débit d'air du cinquième circuit passant par le quatrième échangeur, afin de ne pas récupérer trop de calories de l'air extrait pour rafraîchir efficacement le bâtiment.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue schématique d'une installation selon un premier mode de réalisation de l'invention ;
- Figure 2 : une vue schématique d'un dispositif de régulation de l'installation de la figure 1 ;
- Figure 3 : une vue schématique de l'installation de la figure 1, dans un deuxième mode de fonctionnement ;
- Figure 4 : une vue schématique de l'installation de la figure 1, dans un troisième mode de fonctionnement ;
- Figure 5 : une vue schématique de l'installation de la figure 1, dans un quatrième mode de fonctionnement ;
- Figure 6 : une vue schématique d'une installation selon un deuxième mode de réalisation de l'invention.

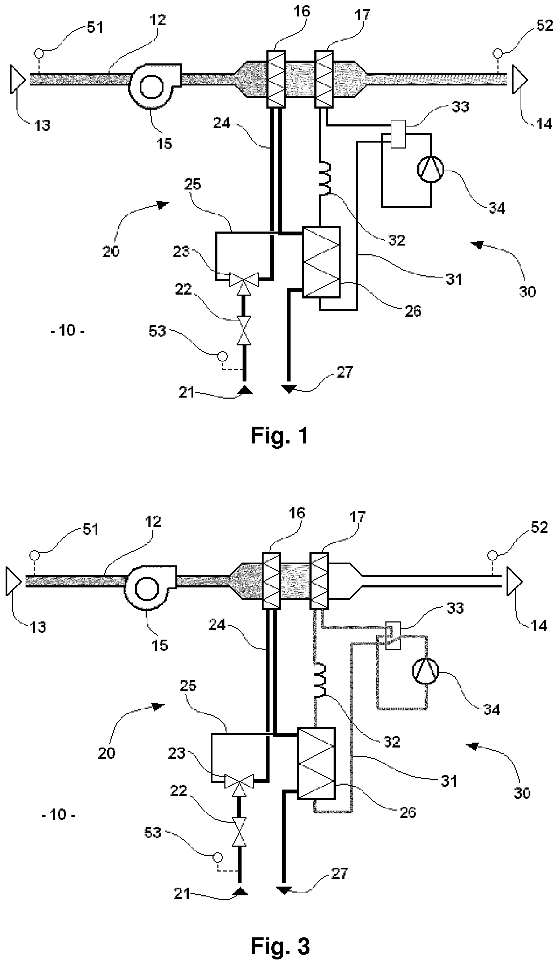

La figure 1 représente une vue schématique d'une installation de régulation thermique, ou unité de confort individuelle (UCI) selon un premier mode de réalisation de l'invention.

L'installation 10 comporte un circuit 12 d'air recyclé à l'intérieur d'un bâtiment (non représenté). Ledit circuit 12 comprend une entrée d'air 13 située à l'intérieur dudit bâtiment et une sortie d'air 14 également située à l'intérieur dudit bâtiment. L'air se déplace dans le circuit 12 au moyen d'un ventilateur 15.

Un premier échangeur thermique 16, de type air/eau, est situé sur le circuit 12. Préférentiellement, il s'agit d'un échangeur formé d'un tube de cuivre pour la circulation de l'eau, sur lequel sont fixées des ailettes en aluminium pour l'échange thermique air/eau.

Le circuit 12 comporte un deuxième échangeur 17, de type air/fluide frigorigène. Le deuxième échangeur 17 est situé en aval du premier échangeur 16, c'est-à-dire plus proche de la sortie d'air 14 que ledit premier échangeur.

L'installation 10 comporte en outre un circuit 20 d'eau, relié à un réseau d'eau froide qui peut être d'origine urbaine ou géothermale, autrement dit un réseau externe, indépendant de l'installation. Le circuit 20 comporte une entrée d'eau 21, l'arrivée d'eau étant commandée par une électrovanne 22. En aval de l'électrovanne se trouve une vanne 23 à trois voies qui relie l'entrée 21 à deux branches (24, 25) du circuit 20 d'eau.

Une première branche 24 passe par le premier échangeur thermique 16 situé sur le circuit 12 d'air, puis par un troisième échangeur thermique 26 de type eau/fluide frigorigène, pour rejoindre une sortie 27 du circuit 20 d'eau.

Une seconde branche 25 relie directement la vanne 23 au troisième échangeur 26, sans passer par le premier échangeur 16.

L'installation 10 comporte en outre un système 30 de pompe à chaleur réversible eau/air. Le système 30 comprend un circuit 31 de fluide frigorigène.

Le circuit 31 relie le deuxième échangeur 17 et le troisième échangeur 26. Sur une première branche située entre lesdits échangeurs se trouve un détendeur 32, par exemple sous la forme d'un capillaire de détente. Sur une seconde branche située entre lesdits échangeurs se trouve une vanne 33 quatre voies à inversion de cycle, reliée à un compresseur 34. Le compresseur peut être à vitesse fixe ou à vitesse variable. La vanne 33 permet de définir un sens de circulation du fluide frigorigène dans le circuit 31 selon le mode de fonctionnement de l'installation 10. Différents modes de fonctionnement seront explicités plus bas.

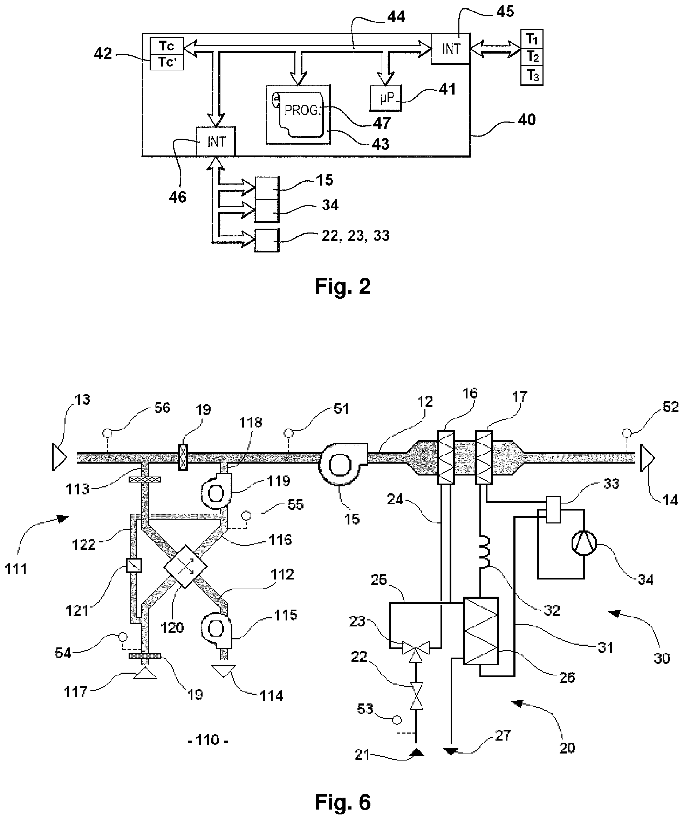

L'installation 10 est gérée par un dispositif 40 électronique de régulation, dont une représentation schématique est montrée à la figure 2.

Ledit dispositif 40 comporte notamment un microprocesseur 41, une mémoire 42 de données, une mémoire 43 de programme et au moins un bus 44 de communication.

La mémoire 42 de données stocke des valeurs de températures de consigne, par exemple Tc et Tc' pour la température de l'air soufflé en sortie 14 du circuit 12 d'air. Ces valeurs peuvent éventuellement être modifiées par un utilisateur.

Par une interface 45 d'entrée, le dispositif 40 est notamment relié à des sondes thermiques de l'installation 10, certaines de ces sondes étant représentées à la figure 1. Des sondes (51, 52) sont notamment situées en entrée 13 et en sortie 14 du circuit 12 d'air. Une sonde 53 est également située en entrée 21 du circuit 20 d'eau.

Par l'intermédiaire d'une interface 46 de sortie, le fonctionnement de l'installation 10 est commandé par un programme 47 qui exécute les étapes d'un procédé selon un mode de réalisation de l'invention.

Le programme 47 commande notamment le fonctionnement du ventilateur 15, du compresseur 34 et des vannes (22, 23, 33).

La figure 1 représente l'installation 10 dans un premier mode de refroidissement de l'air intérieur au bâtiment. Selon ce premier mode, les calories de l'air recyclé sont prélevées directement par le circuit 20 d'eau et le système 30 de pompe à chaleur n'est pas en fonctionnement.

Selon ledit premier mode, la vanne 23 à trois voies est positionnée de sorte que l'eau du circuit 20 suive la trajectoire représentée en trait épais sur la figure 1, passant par la branche 24 et par l'échangeur thermique 16. Plus précisément, l'air pénètre dans le circuit 12 par l'entrée 13, à une température T₁ mesurée par la sonde 51. L'air traverse ensuite l'échangeur thermique 16 et cède une partie de ses calories à l'eau du circuit 20. L'air, refroidi à une température T₂ mesurée par la sonde 52, retourne ensuite à l'intérieur du bâtiment par la sortie 14.

Autrement dit, l'installation 10 fonctionne comme un ventilo-convecteur et le circuit 31 de fluide frigorigène est à l'arrêt.

Ce mode de fonctionnement, le plus économique, est favorisé par le programme 47 si la température T₂ de sortie d'air reste inférieure ou égale à une température maximale Tc de consigne, mémorisée dans la mémoire 42 de données.

Si la température T₃ d'entrée d'eau mesurée par la sonde 53, en amont de la vanne 23 à trois voies, est trop élevée, l'eau du circuit 20 ne peut pas suffire à maintenir la température Tc de consigne de l'air en sortie du circuit 12. Plutôt que de contrôler la température T₂ de sortie d'air, le programme 47 peut considérer que le premier mode de refroidissement n'est applicable que si T₃ reste inférieure à Tc - ΔT, ΔT étant un écart de température mémorisé dans la mémoire 42 de données. On a par exemple ΔT = 5 °C.

Si T₂ dépasse Tc ou si T₃ dépasse Tc - ΔT, le programme 47 bascule l'installation 10 dans un deuxième mode de refroidissement, schématisé à la figure 3.

Selon ledit deuxième mode, la vanne 23 à trois voies est positionnée comme à la figure 1. Par ailleurs, le système 30 de pompe à chaleur est en fonctionnement et la vanne 33 quatre voies est positionnée de sorte à ce que l'échangeur 17 air/fluide frigorigène soit en mode évaporateur, comme illustré en trait épais à la figure 3. Dans ce cas, le circuit de fluide frigorifique fonctionne comme un climatiseur air/eau.

Comme dans le premier mode de refroidissement, l'air entrant dans le circuit 12 cède une partie de ses calories à l'eau du circuit 20 au niveau de l'échangeur 16. Puis, l'air traverse le deuxième échangeur thermique 17 et cède à nouveau des calories au fluide frigorigène du circuit 31.

Le fluide frigorigène passe à l'état gazeux en récupérant lesdites calories. Il traverse ensuite le compresseur 34 et monte en pression et en température. Il arrive alors au troisième échangeur 26 et cède des calories à l'eau du circuit 20, en passant à l'état liquide. Il traverse enfin le détendeur 32 avant de retourner au deuxième échangeur thermique 17.

La mise en série des deux échangeurs air/eau 16 et air/fluide frigorigène 17 permet d'optimiser le refroidissement de l'air en conservant une unique source d'évacuation des calories, en l'occurrence le réseau d'eau froide.

Cependant, pour permettre un premier échange thermique direct au niveau de l'échangeur 16, la température T₃ de l'eau en entrée 21 du circuit 20 doit être inférieure à une température maximale, déterminée par le programme 47 en fonction de la température T₁ de l'air en entrée 13 du circuit 12. Cette température maximale est par exemple égale à T₁ - Δ'T, Δ'T étant un écart de température mémorisé dans la mémoire 42 de données. On a par exemple Δ'T = 5 °C.

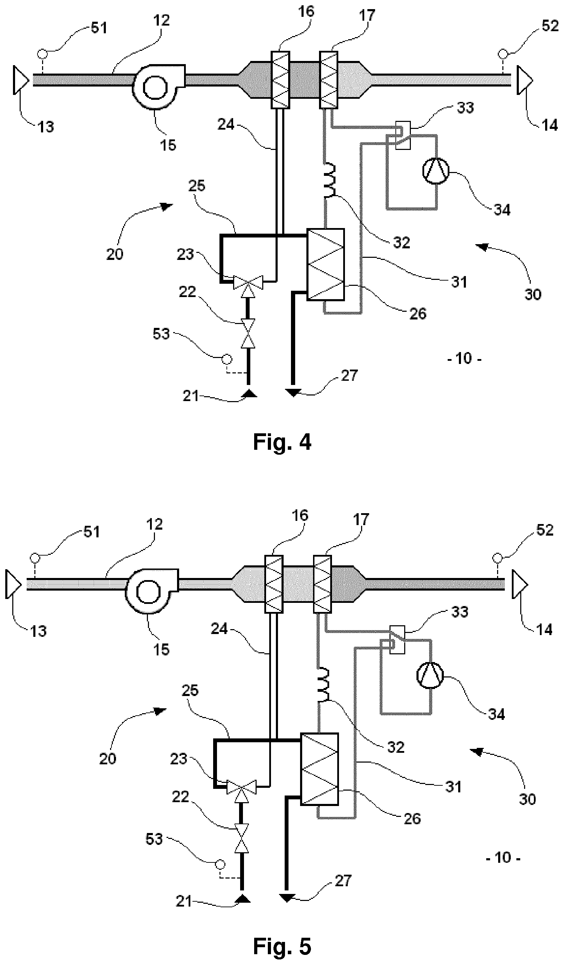

Si T₃ dépasse cette température maximale, le programme 47 bascule alors l'installation 10 dans un troisième mode de refroidissement, schématisé à la figure 4.

Selon ledit troisième mode, la vanne 23 à trois voies est positionnée de manière à faire passer l'eau du circuit 20 par la branche 25 et à contourner l'échangeur 16. Par ailleurs, le système 30 de pompe à chaleur est en fonctionnement et la vanne 33 quatre voies est positionnée comme à la figure 3, de sorte à ce que l'échangeur 17 air/fluide frigorigène soit en mode évaporateur. Là encore, le circuit de fluide frigorifique fonctionne comme un climatiseur air/eau.

Ainsi, l'échange thermique avec l'air du circuit 12 s'effectue uniquement au niveau du deuxième échangeur thermique 17. L'air cède des calories au fluide frigorigène du circuit 31, qui les cède à son tour à l'eau du circuit 20 par l'intermédiaire de l'échangeur thermique 26.

Lorsque les conditions climatiques nécessitent de réchauffer l'air intérieur au bâtiment plutôt que de le refroidir, l'installation 10 est également en mesure d'assurer une telle fonction de chauffage. Le programme 47 a alors pour objectif de maintenir la température T₂ supérieure ou égale à une température minimale de consigne Tc'.

Le programme 47 bascule donc l'installation 10 dans un mode de chauffage, schématisé à la figure 5.

Selon ledit mode, la vanne 23 à trois voies est positionnée comme à la figure 4. Par ailleurs, le système 30 de pompe à chaleur est en fonctionnement et la vanne 33 quatre voies est positionnée de sorte à ce que l'échangeur 17 air/fluide frigorigène soit en mode condenseur.

Autrement dit, dans ce cas l'installation 10 fonctionne comme une pompe à chaleur de type eau/air puisant, dans le circuit d'eau 20, les calories permettant de réchauffer l'air intérieur au bâtiment.

Ainsi, l'échange thermique avec l'air du circuit 12 s'effectue uniquement au niveau du deuxième échangeur thermique 17. L'air récupère des calories du fluide frigorigène du circuit 31, qui à son tour prélève des calories à l'eau du circuit 20 par l'intermédiaire de l'échangeur thermique 26 en mode évaporateur.

Une telle installation permet, à partir d'une seule source d'eau froide, de fournir à l'air d'un bâtiment un moyen de chauffage ainsi que plusieurs moyens de refroidissement, plus ou moins économiques en énergie.

La figure 6 représente une vue schématique d'une installation de régulation thermique domestique 110 selon un deuxième mode de réalisation de l'invention.

L'installation 110 comporte tous les éléments de l'installation 10 décrite ci-dessus. Lesdits éléments seront désignés ci-après par les mêmes numéros de référence.

L'installation 110 comporte par ailleurs un système 111 de ventilation mécanique contrôlée double flux.

Ledit système 111 comprend un circuit 112 d'air extrait à l'intérieur du bâtiment. Ledit circuit 112 d'air extrait comprend une entrée 113, reliée à l'intérieur dudit bâtiment. L'entrée 113 est par exemple formée par une prise d'air située sur le circuit 12, à proximité de l'entrée 13.

Le circuit 112 d'air extrait comporte en outre une sortie 114 reliée à l'extérieur du bâtiment. L'air extrait se déplace dans le circuit 112 au moyen d'un ventilateur 115.

Le système 111 comprend en outre un circuit 116 d'air neuf extérieur au bâtiment. Ledit circuit 116 comprend une entrée 117 reliée à l'extérieur dudit bâtiment et une sortie 118 reliée à l'intérieur dudit bâtiment. La sortie 118 est par exemple reliée au circuit 12 d'air recyclé, en aval de l'entrée 113 du circuit d'air extrait et en amont des échangeurs thermiques (16, 17). L'air neuf se déplace dans le circuit 116 au moyen d'un ventilateur 119.

Le circuit 112 d'air extrait et le circuit 116 d'air neuf se croisent dans un échangeur 120 thermique à récupération passive. L'échangeur 120 air/air est situé proche des entrées (113, 117) du premier et du deuxième circuit, en aval desdites entrées.

L'échangeur 120 permet un échange thermique entre l'air extrait et l'air neuf. Ainsi, en hiver, l'air entrant par le circuit 116 d'air neuf récupère une partie des calories de l'air sortant par le circuit 112 d'air extrait. Inversement, en été, l'air entrant est rafraîchi par l'air sortant, qui évacue des calories à l'extérieur du bâtiment.

Une vanne de contournement ou vanne by-pass 121, ou un dispositif équivalent, est montée en parallèle de l'échangeur 120, sur le circuit 116 d'air neuf. Plus précisément, la vanne 121 est située sur une branche secondaire 122 du circuit 116, une première extrémité de ladite branche étant située entre l'entrée 117 d'air neuf et l'échangeur 120, une seconde extrémité de ladite branche 122 étant raccordée au circuit 116 en aval de l'échangeur 120.

La vanne 121 permet de moduler la quantité d'air neuf passant dans l'échangeur 120 par le circuit 116. Lorsqu'il est souhaitable de maximiser l'échange thermique au niveau de l'échangeur 120, la vanne 121 est fermée et l'air ne circule pas dans la branche 122.

L'installation 110 peut en outre comporter des filtres 19 à air situés sur les différents circuits (12, 112, 116) d'air, à proximité des entrées (13, 113, 117). De même, un filtre 19 peut équiper l'entrée 13 du circuit 12 de l'installation 10 précédemment décrite.

Le circuit 116 d'air neuf de l'installation 110 comporte deux sondes (54, 55) de température, l'une étant située proche de l'entrée 117 et l'autre en aval de l'échangeur 120.

Les sondes (54, 55) sont reliées à un dispositif 40 électronique de régulation de l'installation 110, analogue au dispositif représenté à la figure 2. Ledit dispositif 40 comporte un programme 47 qui commande notamment le fonctionnement des ventilateurs (115, 119) et de la vanne 121.

En hiver, il arrive que la température T₄ de l'air entrant, mesurée par la sonde 54, soit très basse. Or, il est important d'éviter la formation de givre dans l'échangeur 120. Il est donc préférable qu'une température T₅ de l'air sortant dudit échangeur, mesurée par la sonde 55, soit maintenue suffisamment supérieure à 0 °C.

A cet effet, le programme 47 commande l'ouverture de la vanne by-pass 121, afin de contrôler le débit d'air neuf passant par l'échangeur 120. Le niveau d'ouverture de la vanne est notamment calculé en fonction de T₄. De cette manière, la température T₅ d'air sortant de l'échangeur 120 peut être maintenue supérieure à une température de consigne mémorisée dans la mémoire 42.

De même, en été, il peut arriver que les températures extérieures soient favorables au refroidissement du local à traiter, notamment en cas d'ensoleillement important qui génère une accumulation de chaleur dans le bâtiment. On a par exemple T₄ < T₁. Dans ce cas, il est possible d'ouvrir complètement la vanne 121 afin de transférer le moins possible de calories de l'air extrait à l'air neuf.

Le système 111 de ventilation mécanique contrôlée double flux permet de rapprocher la température de l'air du circuit 12 de la température (Tc, Tc') souhaitée, avant le passage de l'air par les échangeurs (16, 17).

Par ailleurs, les modes de fonctionnement desdits échangeurs (16, 17), décrits ci-dessus pour l'installation 10 et illustrés aux figures 1, 3, 4 et 5, s'appliquent également à l'installation 110. Cependant, la sonde 51 décrite précédemment et mesurant la température T₁ d'entrée d'air, se trouve en aval de la sortie 118 d'air neuf rejoignant le circuit 12. L'entrée 13 dudit circuit comporte une autre sonde 56 de température, positionnée par exemple en amont de la prise 113 du circuit 112 d'air extrait sur le circuit 12 d'air recyclé. La sonde 56 mesure une température T₆ qui, comparée avec T₁, permet au programme 47 de moduler la régulation thermique liée au système 111.

D'une manière générale, pour les installations (10, 110) décrites ci-dessus, le programme 47 peut mettre en oeuvre différents modes de fonctionnement de l'installation en fonction d'une planification horaire. Par exemple, les températures Tc, Tc' de consigne de l'air en sortie du circuit 12 peuvent être modifiées en fonction de l'heure de la journée.

Pour l'installation 110 de la figure 6, le programme 47 peut profiter de certaines plages horaires pour refroidir le local à l'aide de l'air neuf du circuit 116, sans faire fonctionner l'électrovanne 22 ni le compresseur 34. Cette plage horaire peut par exemple être nocturne, pour un local ne recevant de personnes qu'en journée. Les débits des ventilateurs (15, 115, 119) peuvent alors être augmentés momentanément, afin d'accélérer le refroidissement du local.

## Revendications

1. Procédé (47) pour la mise en oeuvre d'une installation (10,110) de régulation thermique d'un bâtiment, laquelle installation comprend :
- un premier circuit (12) d'air, comprenant une entrée et une sortie d'air toutes deux reliées à l'intérieur du bâtiment, et comprenant un premier échangeur thermique (16) air/eau et un deuxième échangeur thermique (17) air/fluide frigorigène, le deuxième échangeur étant disposé en aval du premier échangeur ;
- un deuxième circuit (20) d'eau comprenant un troisième échangeur thermique (26) eau/fluide frigorigène, le deuxième circuit d'eau comprenant une vanne trois voies (23) reliant une entrée d'eau (21) dudit circuit à deux branches (24, 25), lesdites branches étant toutes deux reliées au troisième échangeur thermique, le premier échangeur thermique étant disposé entre ladite vanne trois voies et ledit troisième échangeur thermique sur une seule (24) desdites deux branches ;
- un système (30) de pompe à chaleur comprenant un troisième circuit (31) de fluide frigorigène, ledit troisième circuit reliant successivement le deuxième échangeur thermique air/fluide frigorigène, un compresseur (34), le troisième échangeur thermique eau/fluide frigorigène et un détendeur (32), le compresseur étant muni d'une vanne quatre voies (33) à inversion de cycle ;
lequel procédé comprenant les étapes consistant à :
- une température (T1) d'entrée d'air étant mesurée sur le premier circuit (12), en amont du premier échangeur thermique (16) ;
- une température (T3) d'eau étant mesurée en entrée (21) du deuxième circuit (20), en amont de la vanne (23) à trois voies ; lequel procédé étant **caractérisé en ce qu'**il comprend l'étape suivante:
- si la température (T1) d'entrée d'air est supérieure à une température (Tc) de consigne de sortie d'air et si la température (T3) d'eau est inférieure à un premier seuil (T1 - Δ'T) dépendant de ladite température d'entrée d'air, alors l'eau du deuxième circuit (20) circule dans le premier échangeur (16).

2. Procédé (47) selon la revendication 1, comprenant en outre les étapes suivantes :
- si la température (T3) d'eau est inférieure à un deuxième seuil (Tc - ΔT) dépendant de la température de consigne de sortie d'air, alors le compresseur (34) est arrêté ;
- si la température (T3) d'eau dépasse ledit deuxième seuil (Tc-ΔT), alors le compresseur (34) est en marche et la vanne quatre voies (33) est configurée de sorte à ce que le deuxième échangeur (17) thermique fonctionne en mode évaporateur.

3. Procédé (47) selon la revendication 1, comprenant en outre les étapes suivantes :
- une température (T2) de sortie d'air est mesurée en sortie (14) du premier circuit (12) ;
- si ladite température (T2) de sortie d'air est inférieure à la température de consigne (Tc) de sortie d'air, alors le compresseur (34) est arrêté ;
- si ladite température (T2) de sortie d'air dépasse ladite température de consigne (Tc), alors le compresseur (34) est en marche et la vanne quatre voies (33) est configurée de sorte à ce que le deuxième échangeur (17) thermique fonctionne en mode évaporateur.

4. Procédé (47) selon l'une des revendications 2 ou 3, comprenant en outre l'étape suivante :
- si la température (T1) d'entrée d'air est supérieure à la température (Tc) de consigne de sortie d'air et si la température (T3) d'eau est supérieure au premier seuil (T1 - Δ'T) dépendant de ladite température d'entrée d'air, alors l'eau du deuxième circuit (20) ne circule pas dans le premier échangeur thermique (16), le compresseur (34) est en marche et la vanne quatre voies (33) est configurée de sorte à ce que le deuxième échangeur (17) thermique fonctionne en mode évaporateur.

5. Procédé (47) selon l'une des revendications 1 à 4, comprenant en outre l'étape suivante :
- si la température (T1) d'entrée d'air est inférieure à une température (Tc') de consigne de sortie d'air, alors l'eau du deuxième circuit (20) ne circule pas dans le premier échangeur thermique (16), le compresseur (34) est en marche et la vanne quatre voies (33) est configurée de sorte à ce que le deuxième échangeur (17) thermique fonctionne en mode condenseur.

6. Procédé selon l'une des revendications 1 à 5, pour la régulation d'une installation comprenant :
- un système (111) de ventilation mécanique contrôlée double flux, ledit système comprenant :
- un quatrième circuit (112) d'air extrait à l'intérieur du bâtiment, ledit quatrième circuit comprenant une entrée (113) reliée à l'intérieur dudit bâtiment et une sortie (114) reliée à l'extérieur dudit bâtiment ;
- un cinquième circuit (116) d'air neuf extérieur au bâtiment, ledit cinquième circuit comprenant une entrée (117) reliée à l'extérieur dudit bâtiment et une sortie (118) reliée au premier circuit (12) d'air, en amont du premier échangeur thermique (16),
- un quatrième échangeur (120) thermique, situé en aval des entrées des quatrième et cinquième circuits, ledit quatrième échangeur permettant un échange thermique entre l'air extrait et l'air neuf, une vanne by-pass (121) étant montée en parallèle du quatrième échangeur sur une branche (122) secondaire du cinquième circuit (116) d'air neuf ;
dans lequel les étapes suivantes sont appliquées :
- une première température (T6) d'air étant mesurée en entrée (13) du premier circuit (12) ;
- une seconde température (T4) d'air étant mesurée en entrée (117) du cinquième circuit (116) ;
- si la première température (T6) est supérieure à la température (Tc) de consigne de sortie d'air et à la seconde température (T4), alors la vanne by-pass (121) est ouverte.

## Patentansprüche

1. Verfahren (47) zum Einsetzen einer Anlage (10, 110) zur thermischen Regulierung eines Gebäudes, wobei die Anlage Folgendes aufweist:
- einen ersten Luftkreislauf (12), welcher einen Lufteintritt und einen Luftaustritt aufweist, welche beide mit dem Inneren des Gebäudes verbunden sind, und welcher einen ersten Luft / Wasser Wärmetauscher (16) und einen zweiten Luft / flüssiges Kältemittel Wärmetauscher (17) aufweist, wobei der zweite Wärmetauscher stromabwärts des ersten Wärmetauschers angeordnet ist;
- einen zweiten Wasserkreislauf (20), welcher einen dritten Wasser / flüssiges Kältemittel Wärmetauscher (26) aufweist, wobei der zweite Wasserkreislauf ein Dreiwegeventil (23) aufweist, welches einen Wassereintritt (21) des Kreislaufs mit zwei Zweigen (24, 25) verbindet, wobei die Zweige alle beide mit dem dritten Wärmetauscher verbunden sind, wobei der erste Wärmetauscher zwischen dem Dreiwegeventil und dem dritten Wärmetauscher in einem einzigen (24) der beiden Zweige angeordnet ist;
- ein Wärmepumpensystem (30), welches einen dritten Kreislauf (31) mit flüssigem Kältemittel aufweist, wobei der dritte Kreislauf aufeinander folgend den zweiten Luft / flüssiges Kältemittel Wärmetauscher, einen Kompressor (34), den dritten Wasser / flüssiges Kältemittel Wärmetauscher und einen Druckminderer (32) verbindet, wobei der Kompressor mit einem Vierwegeventil (33) mit Zyklusumkehrung verbunden ist; wobei das Verfahren aus den folgenden Schritten besteht:
- eine Temperatur (T1) am Lufteintritt wird am ersten Kreislauf (12) stromaufwärts des ersten Wärmetauschers (16) gemessen;
- eine Wassertemperatur (T3) wird am Ausgang (21) des zweiten Kreislaufs (20) stromaufwärts des Dreiwegeventils (23) gemessen;
wobei das Verfahren **dadurch gekennzeichnet ist, dass** es den folgenden Schritt aufweist:
- wenn die Temperatur (T1) am Lufteintritt größer als eine Solltemperatur (Tc) am Luftaustritt ist und wenn die Wassertemperatur (T3) kleiner als ein erster von der Temperatur am Lufteintritt anhängiger Schwellenwert (T1 - Δ'T) ist, dann zirkuliert das Wasser des zweiten Kreislaufs (20) in dem ersten Wärmetauscher (16).

2. Verfahren (47) nach Anspruch 1, außerdem aufweisend die folgenden Schritte:
- wenn die Wassertemperatur (T3) kleiner als ein zweiter von der Solltemperatur am Luftaustritt abhängiger Schwellenwert (Tc - ΔT) ist, dann wird der Kompressor (34) gestoppt;
- wenn die Wassertemperatur (T3) den zweiten Schwellenwert (Tc - ΔT) überschreitet, dann ist der Kompressor (34) in Betrieb und wird das Vierwegeventil (33) derartig konfiguriert, dass der zweite Wärmetauscher (17) im Modus als Verdampfer arbeitet.

3. Verfahren (47) nach Anspruch 1, außerdem aufweisend die folgenden Schritte:
- eine Temperatur (T2) am Luftaustritt wird am Austritt (14) des ersten Kreislaufs (12) gemessen;
- wenn die Temperatur (T2) am Luftaustritt kleiner als die Solltemperatur (Tc) am Luftaustritt ist, dann wird der Kompressor (34) gestoppt;
- wenn die Temperatur (T2) am Luftaustritt die Solltemperatur (Tc) am Luftaustritt überschreitet, dann ist der Kompressor (34) in Betrieb und wird das Vierwegeventil (33) derartig konfiguriert, dass der zweite Wärmetauscher (17) im Modus als Verdampfer arbeitet.

4. Verfahren (47) nach einem der Ansprüche 2 oder 3, außerdem aufweisend den folgenden Schritt:
- wenn die Temperatur (T1) am Lufteintritt größer als die Solltemperatur (Tc) am Luftaustritt ist und wenn die Wassertemperatur (T3) größer als ein erster von der Temperatur am Lufteintritt anhängiger Schwellenwert (T1 - Δ'T) ist, dann zirkuliert das Wasser des zweiten Kreislaufs (20) nicht in dem ersten Wärmetauscher (16), ist der Kompressor (34) in Betrieb und wird das Vierwegeventil (33) derartig konfiguriert, dass der zweite Wärmetauscher (17) im Modus als Verdampfer arbeitet.

5. Verfahren (47) nach einem der Ansprüche 1 bis 4, außerdem aufweisend den folgenden Schritt:
- wenn die Temperatur (T1) am Lufteintritt kleiner als eine Solltemperatur (Tc') am Luftaustritt ist, dann zirkuliert das Wasser des zweiten Kreislaufs (20) nicht in dem ersten Wärmetauscher (16), ist der Kompressor (34) in Betrieb und wird das Vierwegeventil (33) derartig konfiguriert, dass der zweite Wärmetauscher (17) im Modus als Kondensator arbeitet.

6. Verfahren nach einem der Ansprüche 1 bis 5 für die Regulierung einer Anlage, aufweisend:
- ein gesteuertes, mechanisches Belüftungssystem (111) mit doppeltem Luftstrom, wobei das System aufweist:
- einen vierten Kreislauf (112) mit aus dem Inneren des Gebäudes entzogener Luft, wobei der vierte Kreislauf einen mit dem Inneren des Gebäudes verbundenen Eintritt (113) und einen mit dem Außenbereich des Gebäudes verbundenen Austritt (114) aufweist;
- einen fünften Kreislauf (116) mit neuer Luft von außerhalb des Gebäudes, wobei der fünfte Kreislauf einen mit dem Außenbereich des Gebäudes verbundenen Eintritt (117) und einen mit dem ersten Luftkreislauf (12) verbundenen, stromaufwärts vom ersten Wärmetauscher (16) liegenden Austritt (118) aufweist,
- einen vierten Wärmetauscher (120), welcher stromabwärts der Eintritte des vierten und fünften Kreislaufs angeordnet ist, wobei der vierte Wärmetauscher einen Wärmeaustausch zwischen der entzogenen Luft und der neuen Luft ermöglicht, wobei ein Bypass-Ventil (121) parallel zu dem vierten Wärmetauscher in einem sekundären Zweig des fünften Kreislaufs (116) mit neuer Luft montiert ist;
bei welchem die folgenden Schritte durchgeführt werden:
- eine erste Lufttemperatur (T6) wird am Eintritt (13) des ersten Kreislaufs (12) gemessen;
- eine zweite Lufttemperatur (T4) wird am Eintritt (117) des fünften Kreislaufs (116) gemessen;
- wenn die Temperatur (T6) größer als die Solltemperatur (Tc) am Luftaustritt und als die zweite Temperatur (T4) ist, dann wird das Bypass-Ventil (121) geöffnet.

## Claims

1. Method (47) for implementing a thermal regulation installation (10, 110) of a building, said installation comprising:
- a first air circuit (12), comprising an air inlet and an air outlet, both linked to the interior of the building, and comprising a first air/water heat exchanger (16) and a second refrigerating air/fluid heat exchanger (17), the second exchanger being arranged downstream of the first exchanger;
- a second water circuit (20) comprising a third refrigerating water/fluid heat exchanger (26), the second water circuit comprising a three-way valve (23) linking a water inlet (21) of said circuit to two branches (24, 25), said branches being both linked to the third heat exchanger, the first heat exchanger being arranged between said three-way valve and said third heat exchanger on just one (24) of said two branches;
- a heat pump system (30) comprising a third refrigerant circuit (31), said third circuit successively linking the second refrigerating air/fluid heat exchanger, a compressor (34), the third refrigerating water/fluid heat exchanger and an expansion valve (32), the compressor being provided with a cycle-inverting four-way valve (33) ;
said method comprising the steps consisting in:
- an air inlet temperature (T1) being measured in the first circuit (12), upstream of the first heat exchanger (16) ;
- a water temperature (T3) being measured at the inlet (21) of the second circuit (20), upstream of the three-way valve (23);
said method being **characterized in that** it comprises the following step:
- if the air inlet temperature (T1) is higher than an air outlet setpoint temperature (Tc) and if the water temperature (T3) is lower than a first threshold (T1-Δ'T) dependent on said air inlet temperature, then the water of the second circuit (20) circulates in the first exchanger (16).

2. Method (47) according to Claim 1, further comprising the following steps:
- if the water temperature (T3) is lower than a second threshold (Tc-ΔT) dependent on the air outlet setpoint temperature, then the compressor (34) is stopped;
- if the water temperature (T3) exceeds said second threshold (Tc-ΔT), then the compressor (34) is running and the four-way valve (33) is configured so that the second heat exchanger (17) operates in evaporator mode.

3. Method (47) according to Claim 1, further comprising the following steps:
- an air outlet temperature (T2) is measured at the outlet (14) of the first circuit (12);
- if said air outlet temperature (T2) is lower than the air outlet setpoint temperature (Tc), then the compressor (34) is stopped;
- if said air outlet temperature (T2) exceeds said setpoint temperature (Tc), then the compressor (34) is running and the four-way valve (33) is configured so that the second heat exchanger (17) operates in evaporator mode.

4. Method (47) according to one of Claims 2 or 3, further comprising the following step:
- if the air inlet temperature (T1) is higher than the air outlet setpoint temperature (Tc) and if the water temperature (T3) is higher than the first threshold (T1-Δ'T) dependent on said air inlet temperature, then the water of the second circuit (20) does not circulate in the first heat exchanger (16), the compressor (34) is running and the four-way valve (33) is configured so that the second heat exchanger (17) operates in evaporator mode.

5. Method (47) according to one of Claims 1 to 4, further comprising the following step:
- if the air inlet temperature (T1) is lower than an air outlet setpoint temperature (Tc'), then the water of the second circuit (20) does not circulate in the first heat exchanger (16), the compressor (34) is running and the four-way valve (33) is configured so that the second heat exchanger (17) operates in condenser mode.

6. Method according to one of Claims 1 to 5, for regulating an installation comprising:
- a double-flow controlled mechanical ventilation system (111), said system comprising:
- a fourth extracted air circuit (112) for air extracted inside the building, said fourth circuit comprising an inlet (113) linked to the interior of said building and an outlet (114) linked to the exterior of said building;
- a fifth new air circuit (116) outside the building, said fifth circuit comprising an inlet (117) linked to the exterior of said building and an outlet (118) linked to the first air circuit (12), upstream of the first heat exchanger (16),
- a fourth heat exchanger (120), situated downstream of the inlets of the fourth and fifth circuits, said fourth exchanger allowing a heat exchange between the extracted air and the new air, a bypass valve (121) being mounted in parallel to the fourth exchanger on a secondary branch (122) of the fifth new air circuit (116);
in which the following steps are applied:
- a first air temperature (T6) being measured at the inlet (13) of the first circuit (12);
- a second air temperature (T4) being measured at the inlet (117) of the fifth circuit (116);
- if the first temperature (T6) is higher than the air outlet setpoint temperature (Tc) and than the second temperature (T4), then the bypass valve (121) is opened.
